# EUROPEAN PATENT SPECIFICATION

(11) **EP 4 516 590 B1**
(45) Date of publication and mention of the grant of the patent: **25.11.2026**
(21) Application number: 24196922.9
(22) Date of filing: 28.08.2024
(51) Int. Cl.: B60R 7/04, B60R 11/02

(54) **VEHICLE STORAGE ASSEMBLY WITH FOLDABLE COVER**
FAHRZEUGLAGERUNGSANORDNUNG MIT FALTBARER ABDECKUNG
ENSEMBLE DE STOCKAGE DE VÉHICULE À COUVERCLE PLIABLE

(30) Priority: 29.08.2023 US 202318457654
(43) Date of publication of application: 05.03.2025
(73) Proprietor: Faurecia Interior Systems USA Holdings, LLC, Auburn Hills, Michigan 48326 (US)
(72) Inventor: BIANCO, Thomas, AUBURN HILLS, 48326 (US); ROCHEREAU, Louis, AUBURN HILLS, 48326 (US); BOINAIS, Olivier, AUBURN HILLS, 48326 (US)
(74) Representative: Novagraaf Group

(56) References cited:
- EP-B1- 2 943 372
- DE-A1- 102017 219 522
- DE-B4- 102021 004 344
- FR-A1- 3 036 070
- US-A1- 2016 297 383

## Description

### TECHNICAL FIELD

The present disclosure is related generally to vehicle interior components and, more particularly, to closable storage compartments in vehicle interiors.

### BACKGROUND

Vehicle interior storage compartments typically include a lid or door that a user opens to access a storage area and closes to conceal the stored items when not in use. These doors often employ a hinge joining one end of a rigid door to one end of the storage area such that the full length of the door pivots about the hinge during opening and closing movements, as with a typical glove box door.

DE102021004344B1 relates to a container for a center console of a motor vehicle, comprising a housing pot which partially surrounds a housing interior and in which a housing opening is formed. The container also includes a housing cover comprising four cover segments. Two adjacent cover segments are pivotably connected to each other about a common pivot axis, so that the housing cover can be folded together. The third segment may provide an inclined support surface for an electronic device.

Another type of storage compartment door is a tambour door as described in U.S. Patent Application Publication No. 2023/0167676 by Piccin, et al. A tambour door includes multiple articulated slats having ends that slide along a curved track during opening and closing movement such that at least a portion of the door slides out of view when opened, in the manner of a rolltop desk. The sizes of the individual slats of a tambour door must be relatively small to facilitate the sliding movement, and the ends of the slats must be constrained on both opposite faces of the door to keep the door in the track.

EP2943372B1 relates to a vehicle interior component, comprising a storage compartment comprising an opening configured to facilitate access to an interior of the storage compartment, and a cover panel having a plurality of segments coupled to one another by a corresponding plurality of hinges, wherein the cover panel is configured to transition between a closed position that substantially blocks the opening in the storage compartment and an open position that facilitates access to the interior of the storage compartment via rotation of at least one segment about at least one hinge and overlapping the at least one segment and at least one other segment of the plurality of segments.

### SUMMARY

In accordance with one or more embodiments, a vehicle interior assembly according to claim 1. The dependent claims set out particular embodiments of the invention.

It is contemplated that any number of the individual features of the above-described embodiments and of any other embodiments reflected in the claims, drawings, or description below can be combined in any combination to define an invention, except where features are incompatible.

### BRIEF DESCRIPTION OF THE DRAWINGS

Illustrative embodiments will hereinafter be described in conjunction with the following figures, wherein like numerals denote like elements, and wherein:
FIG. 1 is a perspective view of an illustrative vehicle interior assembly in a closed condition;
FIG. 2 is a perspective view of the interior assembly of FIG. 1 in an open condition;
FIG. 3 is a schematic side view of a cover of the interior assembly of FIGS. 1 and 2 in a first open condition;
FIG. 4 is a schematic side view of the cover of FIG. 3 in a second open condition;
FIG. 5 is a schematic cross-sectional view of a portion of the interior assembly of FIG. 2 with the cover in the first open condition of FIG. 3;
FIG. 6 is a schematic side cutaway view showing the cover of a vehicle interior assembly moving from the closed condition to an open condition;
FIG. 7 is a schematic side cutaway view showing the cover of FIG. 6 moving from the closed condition to another open condition;
FIG. 8 is a schematic side cutaway view showing the cover of FIGS. 6 and 7 moving from the closed condition to another open condition;
FIG. 9 is a schematic side cutaway view showing the cover of FIGS. 6-8 moving from one open condition to another open condition;
FIG. 10 is a perspective view of another example of the vehicle interior assembly in an open condition;
FIG. 11 is a schematic cutaway view of a portion of the interior assembly of FIG. 10;
FIG. 12 is a schematic cutaway view showing the cover of FIGS. 10 and 11 in another open condition; and
FIG. 13 is a schematic cutaway view of a variation of the cover of FIGS. 10-12 in an open condition.

### DESCRIPTION OF ILLUSTRATIVE EMBODIMENTS

Described below is a vehicle interior assembly with a slatted cover that moves to open or close a storage compartment. The cover can assume multiple shapes and the assembly can support and/or charge a portable electronic device above the storage compartment when the compartment is either open or closed. Unlike the slats of a tambour door, the cover includes slats that are permitted to lose contact with its guide surface to form an inclined surface against which a portable electronic device can rest.

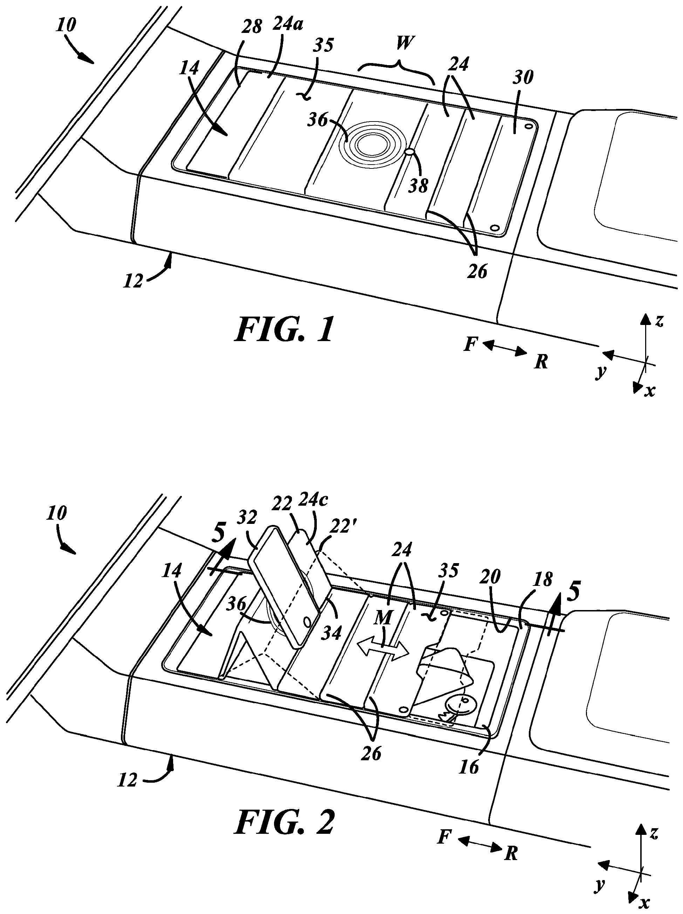

FIG. 1 is a perspective view of an illustrative vehicle interior assembly 10 including a storage compartment 12 and a cover 14 shown in a closed condition. FIG. 2 illustrates the assembly 10 of FIG. 1 with the cover 14 in an open condition. The illustrated assembly 10 is part of a center console arranged between transversely spaced occupant seats in a vehicle passenger cabin, rearward of a vehicle instrument panel and forward of an occupant armrest. A transverse direction (x) of the assembly 10 is aligned with the transverse (left-to-right) direction of the vehicle, a longitudinal direction (y) of the assembly is aligned with the longitudinal or front (F) to rear (R) direction of the vehicle, and a vertical direction (z) of the assembly is aligned with the vertical direction of the vehicle. The assembly 10 is not limited to this orientation with respect to the vehicle, and the assembly may be or may be part of a different vehicle interior component, such as an instrument panel, door panel, etc.

The storage compartment 12 includes a plurality of walls (e.g., a bottom wall, side walls, and a top wall) and an opening 16 through which a storage volume is accessible when the cover 14 is in the open position as in FIG. 2. In this example, the opening 16 lies in an x-y plane and is defined by a ledge 18 that circumscribes the opening 16. The illustrated opening 16 is generally rectangular and the ledge 18 extends along all four sides of the opening. In other embodiments, the ledge 18 extends only along transversely opposite sides of the opening 16 or along longitudinally opposite sides of the opening. The ledge 18 is configured to support the cover 14 above and over the opening 16.

The storage compartment also includes a guide or guide surface 20 extending vertically between the ledge 18 and an upper surface of the compartment 12. The guide surface 20 effectively provides a recess in the upper surface of the storage compartment 12 in which the ledge 18 supports the cover 14. The guide surface 20 may also constrain the cover 14 in a direction perpendicular to the direction M of opening and closing movement of the cover. In this case, the direction of opening and closing movement is the longitudinal (y) direction, and the guide surface 20 constrains the cover 14 in the transverse (x) direction.

The illustrated cover 14 is a foldable cover and may be attached to the storage compartment 12 for movement between the closed condition and one or more open conditions. In the closed condition, the cover 14 conceals and covers the storage compartment opening 16, thereby blocking access to the storage volume. In the open condition, the storage volume is accessible through the opening 16 and through a space defined between a rear edge of the opening 16 and a rear edge of the cover 14. In the illustrated example, the cover 14 is unfolded and flat in the closed condition of FIG. 1 and includes an apex 22 in the open condition of FIG. 2. The cover 14 need not be perfectly flat in the closed condition. The cover 14 may for example be supported along a large radius of curvature (e.g., 250-500 mm) in a y-z plane and/or an x-z plane. FIG. 2 also illustrates portions of the cover 14 in a different open condition (in broken lines) in which the apex 22' is in a different location (i.e., vertically lower and longitudinally rearward of apex 22) relative to the storage compartment 12.

The cover 14 includes a plurality of slats 24 and one or more hinge joints 26. Each hinge joint 26 is located between and interconnects adjacent slats 24 of the plurality of slats. Each slat 24 spans the storage compartment opening 16 with its transversely opposite ends supported by the ledge 18 of the storage compartment. The cover 14 has opposite and longitudinally spaced first and second ends 28, 30. The first end 28 of the cover 14 may be pivotably attached to the storage compartment 12 via an end slat 24a, and the second end 30 of the cover 14 may be a free end that is not attached to the storage compartment. Alternatively, the first end 28 of the cover 14 may also be an unattached free end, or the end slat 24a may be attached to the storage compartment 12 at a fixed position and not able to pivot away from the storage compartment. In this context, "attached" means "not manually removable," and "not attached" or "unattached" means the slat can be manually removed to be out of contact with the storage compartment. In this example, each of the slats 24 between the end slat 24a and the free end 30 are also not attached to the storage compartment 12-i.e., their vertical movement is not constrained in a direction away from the storage compartment.

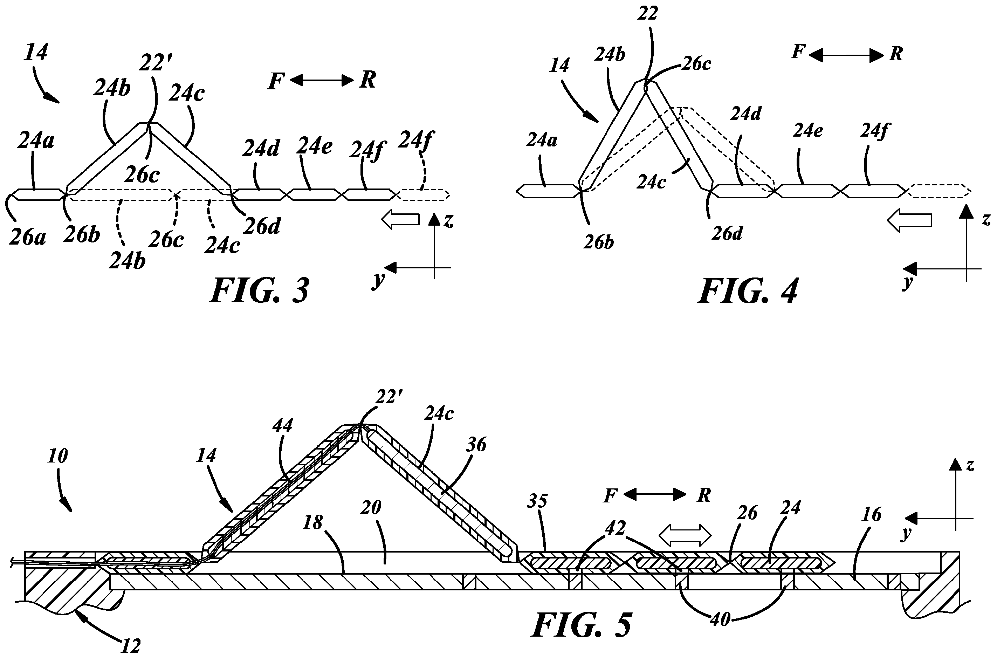

Each slat 24 may be pivotable away from the storage compartment 12 about one of the hinge joints 26 independently from an adjacent slat on an opposite side of the same hinge joint. This independence of pivoting movement away from the storage compartment 12 is provided in part by the ability of the hinge joints 26 to move away from the storage compartment 12. This is illustrated with reference to FIGS. 3 and 4, which schematically illustrate the cover 14 in respective first and second open conditions and in which the storage compartment 12 is omitted.

FIG. 3 illustrates the cover 14 moved from the closed condition (shown in broken lines) to the first open condition. The rearmost slats 24d-24f are moved forward an amount approximately equal to their slat width (measured in the y-direction), while the forwardmost slat 24a is not moved. The slats 24a and 24d-24f thus maintain the same orientation they have in the closed condition. Because vertical movement of the slats 24b, 24c and the hinge joint 26c away from the storage compartment is unconstrained, the hinge joint 26c is moved vertically away from the storage compartment 12, and the slats 24b and 24c assume an inclined orientation by pivoting about respective hinge joints 26b and 26d to forming the apex 22' of FIG. 2 along hinge joint 26c. The storage volume of the assembly 10 is accessible through the opening 16 at the former location of slat 24f.

FIG. 4 illustrates the cover 14 moved from the first open condition (shown in broken lines) to the second open condition. The rearmost slats 24d-24f are again moved forward an amount approximately equal to their slat width (two slat widths from the closed condition), while the forwardmost slat 24a is not moved. The slats 24a and 24d-24f thus maintain the same orientation they have in the closed condition and the first open condition. The unconstrained hinge joint 26c is moved vertically further away from the storage compartment 12, and the slats 24b and 24c assume a more inclined orientation. The storage volume of the assembly 10 is accessible through the opening 16 at the former (closed condition) location of slats 24e-24f.

During each of these movements, each of the slats 24 that pivots about a hinge joint 26 away from the storage compartment 12 pivots independently from an adjacent slat on the opposite side of the hinge joint. In particular, slat 24b pivots away from the storage compartment 12 about hinge joint 26b independently from adjacent slat 24a, which does not pivot away from the storage compartment or change position. Also, slat 24c pivots away from the storage compartment 12 about hinge joint 26d independently from slat 24d, which does not pivot away from the storage compartment and only moves longitudinally. The only slat 24 in the illustrated example that is not able to pivot away from the storage compartment 12 independently from other slats is end slat 24a, due to its attachment to the storage compartment via hinge joint 26a. In embodiments where both ends 28, 30 of the cover 14 are unattached free ends, all of the slats 24 can pivot away from the storage compartment 12 about one of the hinge joints independently from an adjacent slat on an opposite side of the same hinge joint.

As illustrated in FIG. 2, the cover 14 is configured to support a portable electronic device 32 in a stable position-i.e., without the device sliding down the inclined slat 24c against which it rests. The device 32 is supported above the opening 16 in one or more open conditions of the cover. In the open condition of FIG. 2, a bottom edge of the device 32 rests on and is supported by the cover 14 at or near one of the hinge joints 26, while a rear face of the device 32 is supported by one of the inclined slats 24c and/or by the apex 22.

The stability of the device support may be enhanced by other features of the cover 14, such as the presence of an elastomer or other high-friction material along an exterior surface 35 of the cover. Also, one or more of the hinge joints 26 may be located along a locally reduced thickness portion of the cover 14, effectively forming a groove 34 in the cover to help stabilize the supported device 32. Additionally, a width W of one or more of the slats 24 may be sized so that the apex 22 is located at or above a midpoint of the rear face of the device 32. For example, a slat width W greater than or equal to about 8 cm will support an average smartphone in the illustrated portrait orientation at or above the midpoint of its rear face. A slat width W greater than or equal to about 9 cm will support a medium-sized tablet computer in a landscape orientation at or above the midpoint of its rear face.

The cover 14 may thus be capable of supporting the portable electronic device 32 above and/or over the opening 16 in the storage compartment 12 at multiple angles of incline when the cover is in an open condition, as well as supporting the device above and/or over the opening in the storage compartment 12 when the cover is in the closed condition-e.g., with the device lying flat on the cover. The device 32 can be supported by the cover 14 in a manner that provides access to the storage volume of the compartment 12 or when the storage volume is in accessible.

The assembly 10 may also be configured to charge the portable electronic device 32 while the cover 14 supports the device above the storage compartment opening 16 in both the open and closed conditions. The assembly 10 includes a wireless charger 36 located along the cover and configured to wirelessly charge a portable electronic device equipped with wireless charging capability. The charger 36 may employ the Qi wireless charging standard, for example, or any other suitable wireless charging standard or protocol. At least a portion of the charger 36, such as one or more induction charging coils, may be embedded in the cover 14. In the illustrated example, a charging coil is embedded in the cover 14 along one of the slats 24c with its location illustrated only for purposes of description.

The cover 14 may include more than one charger 36 or charging coil located along the same slat 24 for side-by-side charging of more than one device 32 or along different slats. Power and control may be provided to the charger 36 via wires embedded in the cover 14 or routed along the non-visible side of the cover. The device 32 may thus be charged whether the storage compartment 12 is open or closed. Even devices that are too large to be supported by an inclined slat 24 of the cover 14 can be wirelessly charged when the cover is in the closed condition, or in the open condition in embodiments with the charger 36 located along a portion of the cover that remains flat while in the open condition.

Alternatively or additionally, the assembly 10 may be equipped to charge a portable electronic device using a wired charger. For example, an opening 38 may be formed through the cover 14 to accommodate a charging cable (e.g., USB/USB-C). The charging cable may be powered by a USB port or other suitable power source. The storage compartment may for example include one or more USB ports inside the storage compartment 12 for charging the device and/or for establishing a wired communication link with another vehicle system (e.g., audio or navigation system). Here again, the device 32 can be charged with the cover 14 in either the closed condition or the open condition with the device supported on an inclined slat 24 or on a flat portion of the cover.

FIG. 5 is a cross-sectional view taken along the ledge 18 of the storage compartment 12 with the cover 14 in the open position of FIG. 3. As illustrated, the assembly 10 may include one or more cover stops 40 configured to secure the cover 14 in a stable open condition, in which the apex 22' is maintained with some of the slats 24 inclined with respect to an x-z plane. The stops 40 are configured to hold the uninclined slats against movement in the rearward longitudinal direction. In other words, the stops 40 prevent the weight of the inclined slats 24 from forcing the cover 14 back into the closed condition.

In this example, the stops 40 magnetically maintain the longitudinal position of the uninclined slats 24 by cooperating with stop elements 42 of the cover 14. The stops 40 and stop elements 42 may both be magnetic with opposite poles facing each other. Alternatively the stops 40 may be magnetic while the stop elements 42 are ferromagnetic (e.g., steel), or vice versa. In this example, the cover stops 40 are located along the ledge and longitudinally spaced along the storage compartment opening 16. The stop elements 42 of the cover 14 have the same spacing when the cover is unfolded or flat. Similar stops 40 can be arranged along the transversely opposite side of the opening 16. In this manner, the cover 14 can assume multiple stable open conditions along the storage compartment 12. In some embodiments, the storage compartment 12 includes multiple stops 40 spaced along the opening 16, while the cover 14 includes one or more stop elements 42 along only one of the slats 24. The stops 40 and/or stop elements 42 may take a different form, such as detents, recesses, or grooves along the compartment 12 or cover 14 with corresponding protrusions along the cover 14 or compartment, respectively.

FIG. 5 also illustrates an exemplary construction of the foldable cover 14. The slats 24 and hinge joints 26 include or are made from materials having different stiffnesses. Each slat 24 is made sufficiently rigid to function as a storage compartment cover able to support its own weight and the weight of one or more portable electronic devices without noticeably deforming. Each hinge joint 26 is made sufficiently flexible to permit each adjacent slat 24 to rotate about an axis in the transverse (x) direction. Each slat 24 may be made from or may include a rigid or semi-rigid plastic or plastic composite, such as polycarbonate (PC), ABS, PC/ABS, polypropylene, or other suitably rigid material. Other sufficiently rigid materials include metallic materials or natural materials such as wood.

The hinge joints 26 may be living hinges formed from a material more flexible thatn the slat materials. One example is a polymer-based material such as silicone, thermoplastic elastomer (TPE), or rubber. Other sufficiently flexible materials include fabrics or textiles containing natural, synthetic, and/or metallic fibers, for example. The hinge joints 26 are not limited to living hinges and may, for example, include pinned joints in the manner of traditional door hinges.

In the illustrated example, the cover 14 includes a plurality of individual and discrete slats 24 overmolded with an elastomeric material that is continuous along the full length and width of the cover such that the slats 24 are completely encased in the elastomer to form an integrated cover as a single piece. In other words, the slats 24 are embedded in a layer of elastomeric material. The elastomeric material may have approximately the same thickness along each of the slats 24 as it has between the slats such that the cover 14 has a locally reduced thickness at each hinge joint 26. The elastomeric material can provide the high-friction exterior surface 35 mentioned above to help maintain a portable electronic device in a stable inclined position and/or prevent the device from sliding when resting atop a flat portion of the cover 14. Other constructions are possible. For example, a plurality of slats 24 may be affixed to a continuous layer of fabric or film with sufficient spacing to allow the fabric or film to function as a hinge joint. Or the slats 24 may be sandwiched between two layers of fabric or film that are sewn together with the slats occupying pockets between the fabric layers.

FIG. 5 also illustrates the wireless charger 36 embedded in the cover 14 with a power cable 44 routed internally through the cover 14. Here, the wireless charger 36 is embedded in the cover-i.e., overmolded with the elastomeric material-as one of the slats 24c. The wireless charger 36 may, for example, be in the form of an induction coil encased in a material that is sufficiently rigid to function as a slat 24 Alternatively, the charger 36 may form a distinct layer along the respective slat 24.

The slats 24 may vary in size along the cover 14. In the illustrated example, the slat 24c containing the charger 36 is larger than some of the other slats 24. That particular slat 24c is sized to accommodate the charger 36 and to provide a sufficiently large surface to support a portable electronic device when inclined in an open condition of the cover. The other slats 24, particularly those to the rear of the charger 36 or device support slat 24 may have a reduced width, which effectively provides a greater number of unique open conditions and/or folded conditions of the cover 14 than if all slats had a width larger enough to accommodate a wireless charger and/or support an electronic device.

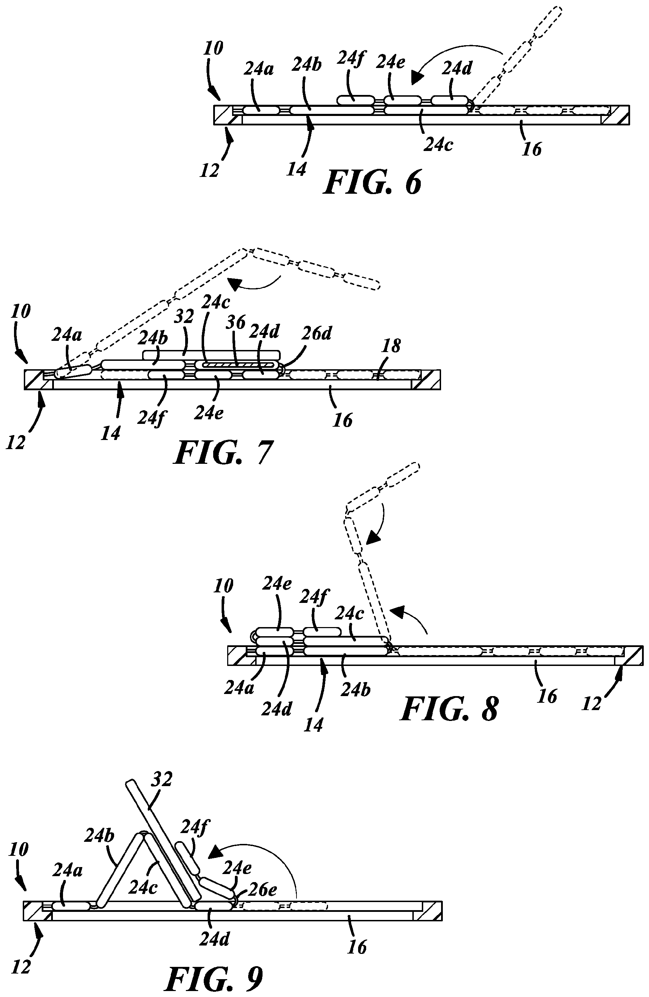

The cover 14 can be configured such that each hinge joint 26 permits at least 180 and up to 360 degrees of rotation of one slat 24 relative to an adjacent slat such that adjacent slats can lie one over the other and overlap in one or more open conditions of the cover. The width of each hinge joint 26 or distance between adjacent slats 24 can be made sufficiently large to accommodate such rotation. FIGS. 6-9 provide some non-limiting examples of various different open conditions of the cover 14, with the slats 24 and hinge joints 26 illustrated schematically.

In FIG. 6, the cover 14 is illustrated moving from the closed condition to an open condition, with the closed condition and an intermediate condition shown in broken lines. In the open condition of FIG. 6, some of the slats 24d-24f are folded over some of the other slats 24b-24c while the cover 14 is not supporting or charging a portable electronic device such that more of the opening 16 is available to access the storage volume of the compartment 14 than in the open conditions of FIGS. 2-5. In similar examples, only one slat 24f is folded onto slat 24e, or two slats 24e-24f are folded onto slats 24c-24d.

In FIG. 7, the cover 14 is illustrated moving from the closed condition to another open condition similar to that of FIG. 6, with the closed condition and an intermediate condition shown in broken lines. In this open condition the same extent of the opening 16 is exposed as in FIG. 6 by folding some of the slats 24d-24f under the remainder of the cover 14, which additionally leaves the wireless charger 36 (if so equipped) available for use by a portable electronic device 32. To achieve this open condition, a user can pivot the forward portion (i.e., slats 24a-24c) of the cover 14 away from the ledge 18 of the storage compartment and fold the other slats 24d-24f under them to be in contact with the ledge. The difference between the open condition of FIG. 6 and the open condition of FIG. 7 demonstrates the ability of the hinge joints 26 to provide 360 degrees of rotation of a slat 24 with respect to an adjacent slat.

In FIG. 8, the cover 14 is illustrated moving from the closed condition to another open condition, with the closed condition and an intermediate condition shown in broken lines. In this open condition, even more of the cover 14 is folded back onto itself from the closed condition to provide greater access to the storage compartment 12 than in the previous figures. Here, the cover 14 includes a double 180-degree fold, with one of the large slats 24c overlying the other large slat 24b and three layers of slats.

In FIG. 9, the cover 14 is illustrated moving from the open condition of FIGS. 2 and 4 (shown in broken lines) to another open condition. In this open condition, some of the slats 24e-24f are folded about one of the hinge joints 26e while the cover 14 is supporting and/or charging a portable electronic device 32 to uncover more of the storage compartment opening 16. A user thus need not remove the device 32 from the inclined cover 14 to enlarge the accessible portion of the storage compartment opening 16. Other open conditions are possible and limited only by the number of slats 24 and hinge joints 26.

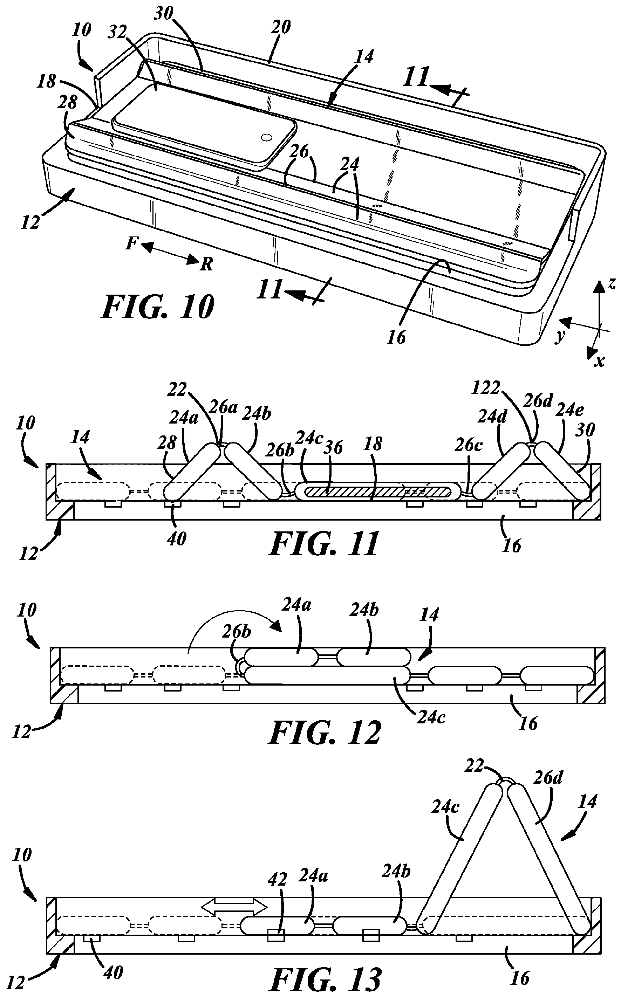

FIG. 10 is a perspective view of another example of the vehicle interior assembly 10 including the storage compartment 12 and cover 14 shown in an open condition and supporting and/or charging a portable electronic device 32. The cover 14 is constructed in the same or similar manner as in the previous example with a plurality of slats 24 spanning the opening 16 of the storage compartment 12 with their opposite ends supported by a ledge 18 that at least partially defines the opening 16. The cover 14 has opposite and transversely spaced first and second ends 28, 30. In this example, the first end 28 of the cover 14 is a free end that is not attached to the storage compartment 12, and the second end 30 of the cover 14 is pivotably attached to the storage compartment via an end slat 24e. One half of the guide surface 20 in the foreground of FIG. 10 is omitted for clarity. Features described in conjunction with the example of FIGS. 1-9-e.g., the details of the slat and hinge construction and function, features for wired device charging, high-friction surfaces, etc.-are applicable to the examples described below, and those descriptions are not repeated here.

In the example of FIG. 10, the slats 24 and hinge joints 26 extend in the longitudinal (y) direction such that the longitudinally spaced ends of each slat are supported by the storage compartment 12. The slats 24 may have a more rigid construction than in the previous example via a stiffer material, greater thickness, and/or convex curvature.

As in the previous example, and with reference to FIG. 11, the cover 14 is unfolded and generally flat in the closed condition, which is illustrated in broken lines. Also as in the previous example, all slats 24 other than the end slat 24e are pivotable away from the storage compartment 12 about one of the hinge joints 26 independently from an adjacent slat on the opposite side of the same hinge joint. In this particular example, slat 24b is pivoted away from the storage compartment 12 about hinge joint 26b independently from adjacent slat 24c on the opposite side of the same hinge joint. Slat 24c has the same orientation as in the closed condition but is translated toward the second end 30 of the cover relative to the closed condition. The same independent pivoting motion is applied to slat 24d with respect to hinge joint 26c and slat 24c.

In the open condition of FIG. 11, the cover 14 forms two apexes 22, 122. This example also includes the above-described wireless charger 36 along one of the slats 24. When supporting and/or charging a portable electronic device 32 above or over the storage container opening 16 as in FIG. 10, the dual-apex shape can help prevent the device from sliding around and/or falling from the cover 14 during vehicle turning maneuvers. This is true for other items temporarily placed on top of the cover 14 as well.

As described above, the assembly 10 may include one or more cover stops 40 configured to secure the cover 14 in a stable open condition, in which the apexes 22, 122 122 are maintained with some of the slats 24 inclined with respect to an x-z plane. The stops 40 are configured to hold the slats against movement in the transverse direction to prevent the weight of the inclined slats 24 from forcing the cover 14 back into the closed condition. In this example, the stops 40 are slots or recesses that mechanically maintain the positions of the inclined slats 24 by cooperating with the free ends of the slats. Alternatively or additionally, the underside of the cover 14 may include protrusions that engage the stops 40, or the stops may be in the form of ridges against which the free ends of the slats rest to maintain the apex shapes. Where a wireless charger 36 or other powered or electronically controlled feature is included in the cover 14, wiring may be routed through the attached end 30 of the cover.

FIGS. 12 and 13 provide some other non-limiting examples of different open conditions of the longitudinally slatted cover 14. In FIG. 12, the cover 14 is illustrated moving from the closed condition to an open condition different from that of FIGS. 10 and 11, with the closed condition shown in broken lines. In the open condition of FIG. 12, some of the slats 24a-24b are folded over the central slat 24c about hinge joint 26b while the cover 14 is not supporting or charging a portable electronic device such that more of the opening 16 is available to access the storage volume of the compartment 12 than in the open condition of FIGS. 10 and 11. The cover 14 may be similarly opened when supporting or charging a device. The cover 14 is also capable of a double 180-degree fold similar to the example of FIG. 8.

FIG. 13 illustrates a variation of the longitudinally slatted cover 14 in which the large slat(s) are off-center. Here, the cover 14 is illustrated moving from the closed condition to an open condition similar to that of FIGS. 2-5, with the closed condition shown in broken lines. The open condition includes an apex 22, with some of the slats 24a-24b translated and some of the slats 24c-24d inclined with respect to their positions and orientations in the closed condition. While not shown here, one or more of the slats 24 may include one or more wireless chargers 36 as described above.

Features described in conjunction with the examples of FIGS. 10-13 are applicable to the examples of FIGS. 1-9 as well. For example, it is contemplated that a transversely slatted cover 14 can be configured to form more than one apex in one or more open conditions of the cover. -13.

It is to be understood that the foregoing is a description of one or more embodiments of the invention. The invention is not limited to the particular embodiment(s) disclosed herein, but rather is defined solely by the claims below. Furthermore, the statements contained in the foregoing description relate to particular embodiments and are not to be construed as limitations on the scope of the invention or on the definition of terms used in the claims, except where a term or phrase is expressly defined above. Various other embodiments and various changes and modifications to the disclosed embodiment(s) will become apparent to those skilled in the art. All such other embodiments, changes, and modifications are intended to come within the scope of the appended claims.

As used in this specification and claims, the terms "e.g.," "for example," "for instance," "such as," and "like," and the verbs "comprising," "having," "including," and their other verb forms, when used in conjunction with a listing of one or more components or other items, are each to be construed as open-ended, meaning that the listing is not to be considered as excluding other, additional components or items. Other terms are to be construed using their broadest reasonable meaning unless they are used in a context that requires a different interpretation.

## Claims

1. A vehicle interior assembly (10), comprising:
a storage compartment (12);
a cover (14) attached to the compartment for movement between open and closed conditions, the cover comprising a plurality of slats (24) spanning an opening (16) of the compartment,
wherein each slat (24) is pivotable away from the compartment about a hinge joint (26) independently from an adjacent slat on an opposite side of the hinge joint, **characterized in that** the assembly further comprises:
a wireless charger (36) located along one of the slats and configured to charge a portable electronic device (32) placed on the charger,
wherein the cover (14) is configured to support the portable electronic device (32) above the opening in both the open and closed conditions, and
wherein the assembly is configured to charge the portable electronic device (32) via the wireless charger while the cover supports the device above the opening in both the open and closed conditions.

2. The vehicle interior assembly of claim 1, further comprising an opening (38) formed through the cover to accommodate a charging cable for the portable electronic device.

3. The vehicle interior assembly of claim 1 or claim 2, wherein the cover (14) is flat in the closed condition and forms an apex (22) pointing away from the storage compartment in the open condition.

4. The vehicle interior assembly of any one of the preceding claims, wherein the open condition is one of a plurality of open conditions and the cover (14) forms an apex (22) pointing away from the storage compartment (12) in each of the open conditions, wherein the apex is in a different location relative to the storage compartment in each of the open conditions.

5. The vehicle interior assembly of any one of the preceding claims, wherein the cover (14) is flat in the closed condition and forms two apexes (22, 122) each pointing away from the storage compartment in the open condition.

6. The vehicle interior assembly of any one of the preceding claims, wherein the hinge joint (26) permits 180 degrees of rotation such that adjacent slats (24) can lie one on the other.

7. The vehicle interior assembly of any one of the preceding claims, wherein the storage compartment comprises a ledge (18) along a perimeter of the opening that supports the cover (14) over the opening (16), and a guide extending from the ledge to constrain the cover in a direction of extension of the hinge joint.

8. The vehicle interior assembly of any one of the preceding claims, wherein the storage compartment comprises cover stops (40) spaced along the opening, the cover (14) engaging one of the stops in the open condition and a different one of the stops in a different open condition such that the cover has multiple open conditions.

9. The vehicle interior assembly of any one of the preceding claims, wherein at least one of the slats (24) and the hinge joint (26) about which it pivots are not attached to the storage compartment.

10. The vehicle interior assembly of any one of the preceding claims, wherein the hinge joint (26) is a living hinge formed from a material that is more flexible than each slat.

11. The vehicle interior assembly of any one of the preceding claims, wherein an exterior surface (35) of the cover (14) comprises an elastomeric material.

12. The vehicle interior assembly of any one of the preceding claims, wherein at least one of the slats (24) is larger than another one of the slats.

## Patentansprüche

1. Fahrzeuginnenraumanordnung (10), umfassend:
ein Aufbewahrungsfach (12);
eine Abdeckung (14), die an dem Fach für eine Bewegung zwischen einem offenen und einem geschlossenen Zustand angebracht ist, die Abdeckung umfassend eine Vielzahl von Latten (24), die eine Öffnung (16) des Fachs überspannen,
wobei jede Latte (24) um ein Scharniergelenk (26) unabhängig von einer angrenzenden Latte auf einer gegenüberliegenden Seite des Scharniergelenks von dem Fach weg schwenkbar ist,
**dadurch gekennzeichnet, dass** die Anordnung ferner umfasst:
ein drahtloses Ladegerät (36), das entlang einer der Latten positioniert und konfiguriert ist, um eine tragbare elektronische Vorrichtung (32) zu laden, die auf dem Ladegerät platziert ist,
wobei die Abdeckung (14) konfiguriert ist, um die tragbare elektronische Vorrichtung (32) über der Öffnung sowohl in dem offenen als auch in dem geschlossenen Zustand zu stützen, und
wobei die Anordnung konfiguriert ist, um die tragbare elektronische Vorrichtung (32) über das drahtlose Ladegerät zu laden, während die Abdeckung die Vorrichtung sowohl in dem offenen als auch in dem geschlossenen Zustand über der Öffnung stützt.

2. Fahrzeuginnenraumanordnung nach Anspruch 1, ferner umfassend eine Öffnung (38), die durch die Abdeckung hindurch ausgebildet ist, um ein Ladekabel für die tragbare elektronische Vorrichtung aufzunehmen.

3. Fahrzeuginnenraumanordnung nach Anspruch 1 oder 2, wobei die Abdeckung (14) in dem geschlossenen Zustand flach ist und in dem offenen Zustand einen Scheitelpunkt (22) ausbildet, der von dem Aufbewahrungsfach weg weist.

4. Fahrzeuginnenraumanordnung nach einem der vorstehenden Ansprüche, wobei der offene Zustand einer von einer Vielzahl von offenen Zuständen ist und die Abdeckung (14) in jedem der offenen Zustände einen Scheitelpunkt (22) ausbildet, der von dem Aufbewahrungsfach (12) weg weist, wobei sich der Scheitelpunkt in jeder der offenen Zustände an einer anderen Position relativ zu dem Aufbewahrungsfach befindet.

5. Fahrzeuginnenraumanordnung nach einem der vorstehenden Ansprüche, wobei die Abdeckung (14) in dem geschlossenen Zustand flach ist und in dem offenen Zustand zwei Scheitelpunkte (22, 122) ausbildet, die jeweils von dem Aufbewahrungsfach weg weisen.

6. Fahrzeuginnenraumanordnung nach einem der vorstehenden Ansprüche, wobei das Scharniergelenk (26) eine derartige Drehung um 180 Grad ermöglicht, dass angrenzende Latten (24) aufeinander liegen können.

7. Fahrzeuginnenraumanordnung nach einem der vorstehenden Ansprüche, wobei das Aufbewahrungsfach einen Vorsprung (18) entlang eines Umfangs der Öffnung, der die Abdeckung (14) über der Öffnung (16) trägt, und eine Führung, die sich von dem Vorsprung erstreckt, umfasst, um die Abdeckung in einer Erstreckungsrichtung der Scharnierverbindung zu begrenzen.

8. Fahrzeuginnenraumanordnung nach einem der vorstehenden Ansprüche, wobei das Aufbewahrungsfach Abdeckungsanschläge (40) umfasst, die entlang der Öffnung beabstandet sind, wobei die Abdeckung (14) einen der Anschläge in dem offenen Zustand in Eingriff nimmt und einen unterschiedlichen der Anschläge in einem unterschiedlichen offenen Zustand in Eingriff nimmt, derart, dass die Abdeckung mehrere offene Zustände aufweist.

9. Fahrzeuginnenraumanordnung nach einem der vorstehenden Ansprüche, wobei mindestens eine der Latten (24) und das Scharniergelenk (26), um das sie schwenkt, nicht an dem Aufbewahrungsfach angebracht sind.

10. Fahrzeuginnenraumanordnung nach einem der vorstehenden Ansprüche, wobei das Scharniergelenk (26) ein Filmscharnier ist, das aus einem Material ausgebildet ist, das flexibler als jede Latte ist.

11. Fahrzeuginnenraumanordnung nach einem der vorstehenden Ansprüche, wobei eine Außenoberfläche (35) der Abdeckung (14) ein elastomeres Material umfasst.

12. Fahrzeuginnenraumanordnung nach einem der vorstehenden Ansprüche, wobei mindestens eine der Latten (24) größer als eine andere der Latten ist.

## Revendications

1. Ensemble intérieur de véhicule (10), comprenant :
un compartiment de rangement (12) ;
un couvercle (14) fixé au compartiment pour un mouvement entre des conditions ouvertes et fermées, le couvercle comprenant une pluralité de lamelles (24) couvrant une ouverture (16) du compartiment,
dans lequel chaque lamelle (24) peut pivoter à l'écart du compartiment autour d'une articulation de charnière (26) indépendamment d'une lamelle adjacente sur un côté opposé de l'articulation de charnière,
**caractérisé en ce que** l'ensemble comprend en outre :
un chargeur sans fil (36) situé le long de l'une des lamelles et conçu pour charger un dispositif électronique portable (32) placé sur le chargeur,
dans lequel le couvercle (14) est conçu pour supporter le dispositif électronique portable (32) au-dessus de l'ouverture dans les conditions aussi bien ouverte que fermée, et
dans lequel l'ensemble est conçu pour charger le dispositif électronique portable (32) par l'intermédiaire du chargeur sans fil tandis que le couvercle soutient le dispositif au-dessus de l'ouverture dans les conditions aussi bien ouverte que fermée.

2. Ensemble intérieur de véhicule selon la revendication 1, comprenant en outre une ouverture (38) formée à travers le couvercle pour accueillir un câble de charge pour le dispositif électronique portable.

3. Ensemble intérieur de véhicule selon la revendication 1 ou la revendication 2, dans lequel le couvercle (14) est plat à l'état fermé et forme un sommet (22) pointant à l'opposé du compartiment de rangement à l'état ouvert.

4. Ensemble intérieur de véhicule selon l'une quelconque des revendications précédentes, dans lequel l'état ouvert fait partie d'une pluralité d'états ouverts et le couvercle (14) forme un sommet (22) pointant à l'opposé du compartiment de rangement (12) dans chacun des états ouverts, dans lequel le sommet se trouve à un emplacement différent par rapport au compartiment de rangement dans chacun des états ouverts.

5. Ensemble intérieur de véhicule selon l'une quelconque des revendications précédentes, dans lequel le couvercle (14) est plat à l'état fermé et forme deux sommets (22, 122) pointant chacun à l'opposé du compartiment de rangement à l'état ouvert.

6. Ensemble intérieur de véhicule selon l'une quelconque des revendications précédentes, dans lequel l'articulation de charnière (26) permet une rotation à 180 degrés de telle sorte que des lamelles adjacentes (24) peuvent reposer l'une sur l'autre.

7. Ensemble intérieur de véhicule selon l'une quelconque des revendications précédentes, dans lequel le compartiment de rangement comprend un rebord (18) le long d'un périmètre de l'ouverture qui soutient le couvercle (14) sur l'ouverture (16), et un guide s'étendant à partir du rebord pour contraindre le couvercle dans une direction d'extension de l'articulation de charnière.

8. Ensemble intérieur de véhicule selon l'une quelconque des revendications précédentes, dans lequel le compartiment de rangement comprend des butées de couvercle (40) espacées le long de l'ouverture, le couvercle (14) venant en prise avec l'une des butées dans l'état ouvert et une butée différente parmi les butées dans un état ouvert différent, de telle sorte que le couvercle a de multiples conditions ouvertes.

9. Ensemble intérieur de véhicule selon l'une quelconque des revendications précédentes, dans lequel au moins l'une des lamelles (24) et l'articulation de charnière (26) autour de laquelle elle pivote ne sont pas fixées au compartiment de rangement.

10. Ensemble intérieur de véhicule selon l'une quelconque des revendications précédentes, dans lequel l'articulation de charnière (26) est une charnière vivante formée d'un matériau qui est plus flexible que chaque lamelle.

11. Ensemble intérieur de véhicule selon l'une quelconque des revendications précédentes, dans lequel une surface extérieure (35) du couvercle (14) comprend un matériau élastomère.

12. Ensemble intérieur de véhicule selon l'une quelconque des revendications précédentes, dans lequel au moins une des lamelles (24) est plus grande qu'une autre des lamelles.
